# EUROPÄISCHE PATENTSCHRIFT

(11) **EP 1 800 958 B1**
(45) Veröffentlichungstag und Bekanntmachung des Hinweises auf die Patenterteilung: **16.07.2008**
(21) Anmeldenummer: 05292797.7
(22) Anmeldetag: 23.12.2005
(51) Int. Cl.: B60R 16/02

(54) **Anordnung zum elektrischen Verbinden von in einem Kraftfahrzeug angebrachten Komponenten mit einer Zentraleinheit**
Arrangement for the electrical connection of components mounted in a motor vehicle with a central unit
Arrangement pour la connection éléctrique de composants montés dans un véhicule automobile avec une unité centrale

(43) Veröffentlichungstag der Anmeldung: 27.06.2007
(73) Patentinhaber: Nexans, 75008 Paris (FR)
(72) Erfinder: Mayer, Udo, Dipl.-Chem., 92637 Weiden (DE); Kreuzer, Thomas, 92660 Neustadt/WN. (DE)
(74) Vertreter: Döring, Roger

(56) Entgegenhaltungen:
- DE-A1- 10 204 597
- DE-A1- 19 816 015
- DE-B3- 10 259 980
- DE-U1-8202005 000 51

## Beschreibung

Die Erfindung bezieht sich auf eine Anordnung zum elektrischen Verbinden von an einem beweglichen Teil eines Kraftfahrzeugs angebrachten Komponenten mit einer Zentraleinheit, bei welcher eine der Anzahl der Komponenten entsprechende Anzahl von elektrischen Leitungen in einer an der Karosserie des Kraftfahrzeugs festgelegten ersten Einheit zusammengefaßt ist, bei welcher zwei Teileinheiten von elektrischen Leitungen, die mit den Leitungen der ersten Einheit verbunden sind, am beweglichen Teil des Kraftfahrzeugs angebracht sind, das um eine Drehachse schwenkbar mit der Karosserie verbunden ist und bei welcher die Leitungen der Teileinheiten im Bereich der Drehachse auf einer Strecke parallel zu derselben geführt sind, deren Länge groß ist im Verhältnis zu den radialen Abmessungen der Teileinheiten (DE-U-20 2005 000 518).

In einem Kraftfahrzeug vorhandene Komponenten sind beispielsweise die Glühlampen in Scheinwerfern und Rückleuchten, Motoren zur Spiegelverstellung, zum Öffnen und Schließen von Fenstern und zur Sitzverstellung, Sitzheizungen, eine Lenkradheizung, Beleuchtungen des Armaturenbrettes und der Kennzeichen, Sensoren, Antennen und Steuergeräte. "Komponenten" können also passive und aktive Teile sein, die mit elektrischem Strom und/oder mit Signalen zu versorgen sind oder Signale liefern. Stellvertretend für alle im Sinne der Erfindung gemeinten Komponenten werden im folgenden "elektrische Stromverbraucher" erwähnt. Sie werden in bekannter Technik mittels der zu Einheiten, sogenannten Kabelbäumen, zusammengefaßten Leitungen mit einer Zentraleinheit verbunden, die zumindest eine Spannungsquelle (Batterie) enthält, aber auch Signalquellen und Steuerelemente aufweisen kann.

Zum Anschluß von elektrischen Stromverbrauchern eines Kraftfahrzeugs, bei welchem es sich um einen Personenkraftwagen (PKW) oder um einen Lastkraftwagen handeln kann, an eine in demselben vorhandene Batterie als Spannungsquelle, werden Kabelbäume eingesetzt, in denen eine mehr oder weniger große Anzahl von elektrischen Leitungen zu einer Einheit zusammengefaßt ist. Je nach Größe der zu überbrückenden Entfernungen zwischen Batterie und/oder Steuergeräten einerseits und Stromverbrauchern andererseits können die Leitungen unterschiedliche Längen haben. Je mehr Stromverbraucher anzuschließen sind, desto aufwendiger werden die Kabelbäume mit entsprechend aufwendiger Montage. Der Einfachheit halber wird im folgenden statt des Wortes "Kraftfahrzeug" die Abkürzung "PKW" verwendet.

Solange die Stromverbraucher an oder in der Karosserie eines PKWs montiert sind, ergeben sich keine besonderen Probleme. Das ist anders, wenn die Stromverbraucher sich an oder in einem beweglichen Teil des PKWs befinden. "Bewegliche Teile" sind dabei alle Türen des PKWs, ganz besonders aber eine als Heckklappe ausgeführte Tür. Der Einfachheit halber wird im folgenden statt der Worte "bewegliches Teil" das Wort "Tür" verwendet. Jede Tür ist um eine Drehachse schwenkbar mit der Karosserie des PKWs verbunden. Die zu den an oder in der Tür angebrachten Stromverbrauchern führenden Leitungen werden bei jeder Bewegung der Tür gebogen. Sie werden also dauernd mechanisch belastet und können daher leicht beschädigt werden.

Bei der bekannten Anordnung nach der eingangs erwähnten DE-U-20 2005 000 518 sind die zu einer Tür führenden Leitungen in zwei Teileinheiten aufgeteilt und im Bereich der Drehachse eines beweglich mit der Karosserie eines Fahrzeugs verbundenen Teils getrennt von einander in zwei Führungselementen angeordnet, deren Mittelachsen zumindest annähernd in der Drehachse liegen. In den Führungselementen sind die Leitungen der beiden Teileinheiten jeweils auf einer Strecke parallel zur Drehachse positioniert, deren Länge groß ist im Verhältnis zu den radialen Abmessungen der Teileinheiten an deren im Bereich der Drehachse liegenden Teilen. Eine unzulässige Verdrehung der Leitungen im Schwenkbereich des beweglichen Teils des Kraftfahrzeugs ist dadurch vermieden. Die beiden in axialer Richtung hintereinander positionierten Führungselemente benötigen jedoch viel Platz in Längsrichtung der Drehachse.

DE-U-20 2005 000518 zeigt die Merkmale des Oberbegriffs des Anspruch 1.

Der Erfindung liegt die Aufgabe zugrunde, die eingangs geschilderte Anordnung so zu gestalten, daß der Platzbedarf der in den Teileinheiten zusammengefaßten Leitungen im Bereich der Drehachse klein gehalten werden kann.

Diese Aufgabe wird gemäß der Erfindung dadurch gelöst, daß die Leitungen der Teileinheiten in ihrem parallel zur Drehachse liegenden Bereich in einem gemeinsamen Führungselement einander mit entgegengerichtetem Verlauf kreuzend angeordnet sind.

In dieser Anordnung sind die Leitungen der Teileinheit eines PKWs im Schwenkbereich zwischen Karosserie und Tür auf einer relativ langen Strecke parallel zur Drehachse und dabei im wesentlichen in dieser Drehachse positioniert. Trotz dieser pro Teileinheit relativ langen Strecke der Leitungen im Bereich der Drehachse ist die Anordnung in axialer Richtung kurz und kompakt ausgeführt, weil die Leitungen der beiden Teileinheiten auf dieser Länge im Führungselement mit parallelem Verlauf im wesentlichen nebeneinander liegen. Dabei haben die Leitungen der beiden Teileinheiten im Führungselement einen entgegengerichteten Verlauf, so daß sie sich in demselben kreuzen. An jedem Ende des Führungselements tritt eine Teileinheit in dasselbe ein und die andere Teileinheit tritt aus demselben aus. Die Teileinheiten können dadurch dem Führungselement auf einfache Weise getrennt voneinander zugeführt und ebenso einfach getrennt voneinander aus demselben herausgeführt werden. Die Leitungen der beiden Teileinheiten haben also im Führungselement einen langen achsparallelen Verlauf von etwa gleicher Länge. Das entsprechend bemessene Führungselement wird somit doppelt ausgenutzt. Sein axialer Platzbedarf ist klein gehalten, und nahezu auf die für eine Teileinheit benötigte Länge begrenzt. Für beide Teileinheiten gilt weiter, daß die Leitungen bei einer Schwenkbewegung der Tür durch dieselbe nicht wesentlich gebogen, sondern nur um die Mittelachse des Führungselements bzw. um sich selbst gedreht (tordiert) werden.

Ausführungsbeispiele des Erfindungsgegenstandes sind in den Zeichnungen dargestellt.

Es zeigen:
Fig. 1 schematisch eine Seitenansicht eines mit einer Heckklappe ausgerüsteten PKWs.
Fig. 2 eine Einzelheit aus Fig. 1 in genauerer, ebenfalls schematischer Darstellung.
Fig. 3 ein Schema der Anordnung nach der Erfindung.
Fig. 4 und 5 in der Anordnung verwendbare Führungselemente in schematischer und vergrößerter Darstellung.

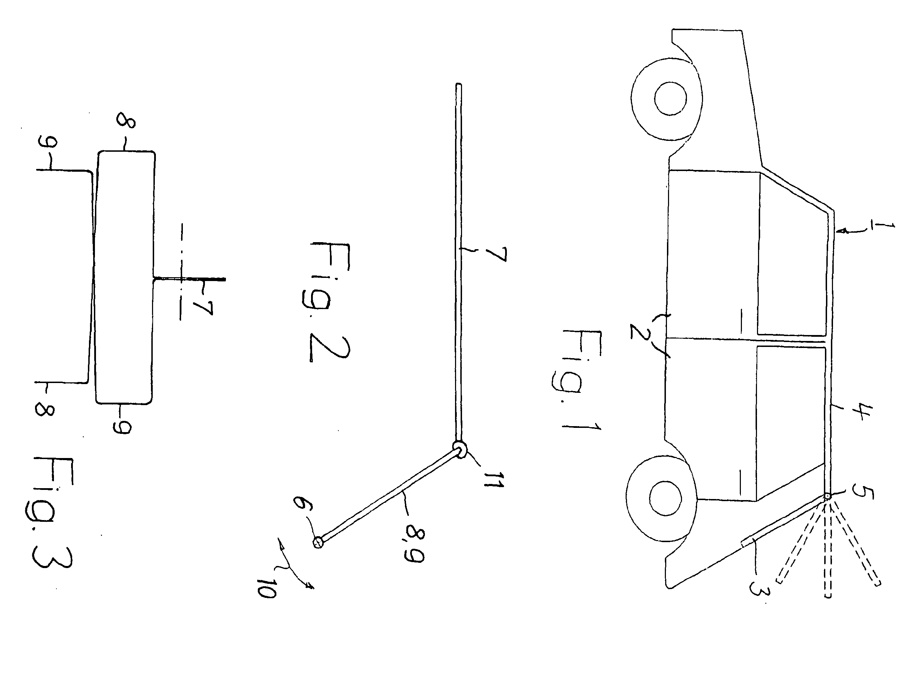

In Fig. 1 ist ein PKW 1 schematisch in einer Seitenansicht dargestellt, der mit seitlichen Türen 2 und einer als Heckklappe ausgeführten Tür 3 ausgerüstet ist. Teile und Ausrüstungen des PKWs 1, die zu seinem Betrieb erforderlich sind, werden hier nicht weiter erläutert. Sie sind grundsätzlich bekannt. Ebenso ist es bekannt, daß Stromverbraucher, wie beispielsweise Scheinwerfer und Rückleuchten, über zumindest einen Kabelbaum mit Strom versorgt werden. Auch der Aufbau eines Kabelbaums ist grundsätzlich bekannt und wird daher nicht beschrieben.

Die Tür 3 ist schwenkbar mit der Karosserie 4 des PKWs 1 verbunden, und zwar beispielsweise über in einer Drehachse 5 vorhandene Scharniere. Sie kann aus der in Fig. 1 dargestellten Schließstellung in gestrichelt eingezeichnete Offenstellungen um die Drehachse 5 geschwenkt werden. An oder in der Tür 3 angeordnete Stromverbraucher 6 sind beispielsweise zu ihrer Stromversorgung über eine erste Einheit 7 und zwei Teileinheiten 8 und 9 (Fig. 3) aus elektrischen Leitungen mit der Zentraleinheit des PKWs 1 verbunden. Diese Verbindung muß ungestört erhalten bleiben, auch wenn die Tür 3 sehr oft in Richtung des Doppelpfeils 10 um die Drehachse 5 geschwenkt wird.

Die an der Karosserie 4 des PKWs 1 befestigte erste Einheit 7 von Leitungen ist gemäß der rein schematischen Darstellung in Fig. 3 in zwei Teileinheiten 8 und 9 aufgeteilt, die zu den Stromverbrauchern 6 der Tür 3 führen. Die Teileinheiten 8 und 9 können mit der ersten Einheit 7 über Steckverbindungen verbunden sein. Sie können dann im Wege der Vormontage an der Tür 3 angebracht werden.

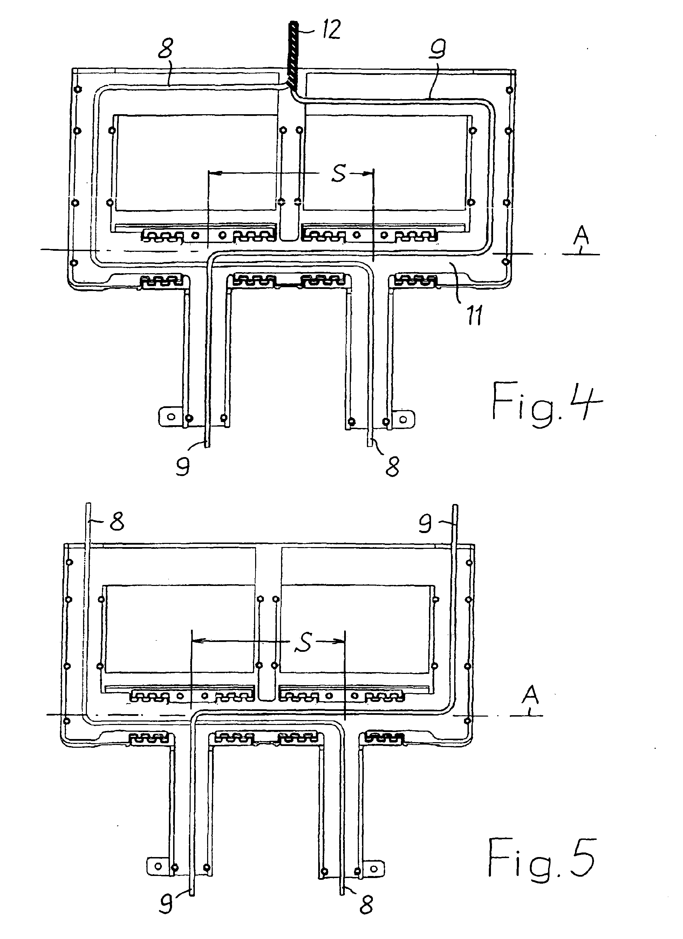

Die Teileinheiten 8 und 9 durchlaufen gemäß den Fig. 4 und 5 mit entgegengesetzter Richtung ein Führungselement 11, dessen Mittelachse A zumindest annähernd in der Drehachse 5 liegt und in bevorzugter Ausführungsform mit dieser zusammen fällt. Das Führungselement 11 kann beispielsweise ein aus Kunststoff bestehendes Rohrstück sein, das zum vereinfachten Einbringen der Teileinheiten 8 und 9 in bevorzugter Ausführungsform aus zwei Halbschalen zusammengesetzt ist. Es kann in der Nähe eines Scharniers der Tür 2 angebracht oder auch in einem solchen Scharnier integriert sein.

In dem Führungselement 1 verlaufen die Leitungen der Teileinheiten 8 und 9 gemäß Fig. 4 zumindest auf einer großen Länge parallel zueinander und zur Drehachse 5, und zwar auf einer Strecke S, deren Länge groß ist im Verhältnis zu den radialen Abmessungen der Teileinheiten 8 und 9. Bei einer Schwenkbewegung der Tür 3 werden nur die in bzw. an derselben montierten Abschnitte der Teileinheiten 8 und 9 zusammen mit der Tür 3 geschwenkt. Dabei werden die Leitungen im Führungselement 11 nur geringfügig um ihre Achse gedreht (tordiert), und zwar zwischen den beiden Enden des parallel zur Drehachse 5 verlaufenden Führungselements 11. In der ersten Einheit 7 selbst, die an der Karosserie 4 befestigt ist, wirkt sich die Schwenkbewegung der Tür 3 auf die Leitungen nicht aus.

Die Strecke S, in der die beiden Teilleitungen 8 und 9 einander "überlappen", soll im Sinne der Erfindung möglichst lang sein. Das ist aus räumlichen und montagetechnischen Gründen aber begrenzt. Die parallel zur Drehachse 5 verlaufenden Längen der beiden Teileinheiten 8 und 9 sind daher in Achsrichtung gegeneinander verschoben bzw. auseinandergezogen, so wie es in den Fig. 4 und 5 dargestellt ist. Die Eintrittsstellen der Teileinheiten 8 und 9 in das Führungselement 11 und deren Austrittstellen sind entsprechend in Achsrichtung versetzt. Es verbleibt aber der in der Strecke S gemeinsam belegte Bereich der Teileinheiten 8 und 9 im Führungselement 11, in dem die beiden Teileinheiten 8 und 9 sich kreuzen und der den relativ kurzen, kompakten Aufbau der Anordnung sicherstellt.

Gemäß Fig. 4 können die beiden Teileinheiten 8 und 9 als Strang 12 zusammengefaßt und erst im erweiterten Führungselement 11 aufgeteilt werden. Sie können gemäß Fig. 5 aber auch schon vorher aufgeteilt und dem erweiterten Führungselement 11 getrennt zugeführt werden.

## Patentansprüche

1. Anordnung zum elektrischen Verbinden von an einem beweglichen Teil eines Kraftfahrzeugs (1) angebrachten Komponenten mit einer Zentraleinheit, bei welcher eine der Anzahl der Komponenten entsprechende Anzahl von elektrischen Leitungen in einer an der Karosserie (4) des Kraftfahrzeugs (1) festgelegten ersten Einheit zusammengefaßt ist, bei welcher zwei Teileinheiten von elektrischen Leitungen (8,9), die mit den Leitungen der ersten Einheit verbunden sind, am beweglichen Teil des Kraftfahrzeugs angebracht sind, das um eine Drehachse schwenkbar mit der Karosserie (4) verbunden ist, und bei welcher die Leitungen der Teileinheiten (8,9) im Bereich der Drehachse auf einer Strecke parallel zu derselben geführt sind, deren Länge groß ist im Verhältnis zu den radialen Abmessungen der Teileinheiten (8,9) **dadurch gekennzeichnet, daß** die Leitungen der Teileinheiten (8, 9) in ihrem parallel zur Drehachse (5) liegenden Bereich in einem gemeinsamen Führungselement (11) einander mit entgegengerichtetem Verlauf kreuzend angeordnet sind.

2. Anordnung nach Anspruch 1, **dadurch gekennzeichnet, daß** das Führungselement (11) ein aus zwei Halbschalen bestehendes Rohr ist.

3. Anordnung nach Anspruch 1 oder 2, **dadurch gekennzeichnet, daß** die Eintrittstellen und die Austrittstellen der Teileinheiten (8, 9) in das und aus dem Führungselement (11) jeweils am gleichen Ende desselben liegen.

4. Anordnung nach Anspruch 1 oder 2, **dadurch gekennzeichnet, daß** die Eintrittstellen und die Austrittstellen der Teileinheiten (8, 9) in das und aus dem Führungselement (11) jeweils in axialer Richtung gegeneinander versetzt sind.

## Claims

1. Arrangement for electrically connecting components which are fitted to a moving part of a motor vehicle (1) to a central unit, in which arrangement a number of electrical lines which corresponds to the number of components is combined in a first unit which is fixed to the body (4) of the motor vehicle (1), in which arrangement two subunits of electrical lines (8, 9), which are connected to the lines of the first unit, are fitted to the moving part of the motor vehicle, which moving part is connected to the body (4) such that it can pivot about a rotation axis, and in which arrangement the lines of the subunits (8, 9) are guided, in the region of the rotation axis, on a path which is parallel to the said rotation axis and is long in relation to the radial dimensions of the subunits (8, 9), **characterized in that** the lines of the subunits (8, 9) are arranged in a common guide element (11) such that they run in opposite directions and crossover in their region situated parallel to the rotation axis (5) .

2. Arrangement according to Claim 1, **characterized in that** the guide element (11) is a tube comprising two half-shells.

3. Arrangement according to Claim 1 or 2, **characterized in that** the entry points and the exit points of the subunits (8, 9) into and out of the guide element (11) are in each case situated at the same end of the said guide element.

4. Arrangement according to Claim 1 or 2, **characterized in that** the entry points and the exit points of the subunits (8, 9) into and out of the guide element (11) are in each case offset in relation to one another in the axial direction.

## Revendications

1. Agencement pour la connexion électrique de composants montés sur une partie mobile d'un véhicule automobile (1) avec une unité centrale, dans lequel un nombre de conduites électriques correspondant au nombre des composants est rassemblé dans une première unité fixée à la carrosserie (4) du véhicule automobile (1), dans lequel deux unités partielles de conduites électriques (8, 9), qui sont connectées aux conduites de la première unité, sont montées sur la partie mobile du véhicule automobile, qui est connectée à la carrosserie (4) de manière à pouvoir pivoter autour d'un axe de rotation, et dans lequel les conduites des unités partielles (8, 9) sont guidées dans la région de l'axe de rotation sur une section parallèle à celui-ci, dont la longueur est grande par rapport aux dimensions radiales des unités partielles (8, 9), **caractérisé en ce que** les conduites des unités partielles (8, 9) sont disposées de manière croisée avec une orientation en sens inverse dans leur région parallèle à l'axe de rotation (5) dans un élément de guidage commun (11).

2. Agencement selon la revendication 1, **caractérisé en ce que** l'élément de guidage (11) est un tube constitué de deux demi-coques.

3. Agencement selon la revendication 1 ou 2, **caractérisé en ce que** les points d'entrée et les points de sortie des unités partielles (8, 9) se situent dans et hors de l'élément de guidage (11) à chaque fois à la même extrémité de celui-ci.

4. Agencement selon la revendication 1 ou 2, **caractérisé en ce que** les points d'entrée et les points de sortie des unités partielles (8, 9) dans et hors de l'élément de guidage (11) sont à chaque fois décalés mutuellement dans la direction axiale.
